# EUROPEAN PATENT APPLICATION

(11) **EP 4 266 116 A1**
(43) Date of publication of application: **25.10.2023**
(21) Application number: 22168884.9
(22) Date of filing: 19.04.2022
(51) Int. Cl.: G02C 7/02

(54) **SPECTACLE LENS FOR OPTIMIZED MYOPIA CONTROL**

(71) Applicant: Carl Zeiss Vision International GmbH, 73430 Aalen (DE)
(72) Inventor: Jester, Philipp, 89520 Heidenheim (DE); Welscher, Markus, 73492 Rainau (DE)
(74) Representative: Carl Zeiss AG - Patentabteilung

(57) **Abstract**

A product comprising a position-specific single-vision lens or a numerical data set describing a position-specific single-vision lens for the purpose of manufacturing said position-specific single-vision lens, said position-specific single-vision lens comprising a front surface and a back surface, wherein said front surface comprising
- a first zone providing a first focal power,
- a second zone surrounding said first zone comprising (i) focusing structures providing a second focal power or (ii) diffusing structures providing.

The back surface comprising (a) an atoroidal surface or (b) a free-form surface with no point or axis symmetry.

## Description

The present invention relates to a product comprising a position-specific single-vision lens or a numerical data set describing a position-specific single-vision lens for the purpose of manufacturing the position-specific single-vision lens according to the preamble of claim 1. The present invention further relates to a computer-implemented method for determining a numerical data set of a position-specific single-vision lens for the purpose of manufacturing the position-specific single-vision lens according to the preamble of claim 2.

The increasing prevalence of myopia in Southeast Asian countries not only represents a potential cost factor for the healthcare system, but also entails immense costs for the economy and for individuals through the costs of purchasing corrective devices. In principle, the existing myopia can be corrected by using glasses, contact lenses, intraocular lenses or also by refractive interventions. However, research shows that this corrects the error of the refraction itself, but in many cases, especially in children, a rapid progression of the spherical portion of the refractive error is reported. It is primarily known from clinical data that refractive errors of -6 D or higher lead to chorioretinal changes at the retinal level. Research activities to reduce the progression of myopia has examined different modes of action of interventions and clinical trials have shown different effectiveness.

Spectacle lenses for myopia control are typically finished single vision lenses or prescribed lenses, which have a special myopia control treatment on the front surface of the spectacle lens, and the prescription for the wearer is realized with a sphere or torus on the back side of the spectacle lens.

A special case of myopia control treatment lenses are spectacle lenses with focusing or diffusing structures, e.g., lenslets or micro cylinder lenses. Such spectacle lenses typically have a narrow central zone for clear vision, while the periphery is perceived as blurred. The design base for the structures on the front surface of the spectacle lens is typically a sphere or, if so, an aspheric surface, that is optimized for one or in some cases even more discrete spherical prescriptions.

If a spherical or aspherical front surface is combined with a torical back surface to realize the prescription of the wearer, an unwanted peripheral blur (e.g., astigmatic error, power error) appears. This blur may reduce or even reverse the myopia control treatment of the front surface of the spectacle lens.

A spectacle lens with a spherical front and a spherical back surface will typically have a hyperopic shift for a myopic prescription in off axis use, that means the focus is behind the retina. This effect is the opposite of the required focus in front of the retina. If a spectacle lens with a spherical front and a spherical back surface is the basis for a myopia control treatment, the function of this treatment will also be reduced in the lens periphery.

An additional point for an influence on the desired effect of a myopia control treatment is, that those spectacle lenses are typically intended to be positioned non-tilted in a certain distance in front of the eye. Due to a pantoscopic angle, a wrap angle and frame shape the spectacle lens for myopia control will be positioned in general tilted and not always with the intended back vertex distance in front of the eye of the wearer. This will cause additional peripheral errors.

Optical errors regarding the prescription of a wearer can be reduced to a minimum by optimizing the back surface of a spectacle lens with an individual atorus for the prescription of the wearer. The influence of optical errors resulting from position-of-wear and the frame shape or from a prismatic prescription can be considered using an individual free-form optimization of the lens. Typically, a free-form surface is optimized for the individual needs of the wearer. Optimizing a lens surface with many degrees of freedom requires proper formulation of the mathematical problem and is numerically expensive.

US 2017 0131567 A1 discloses a spectacle lens for inhibiting ametropia of the eyes and ensure full visibility with focusing structures on the front surface of the spectacle lens. The spectacle lens comprises first refraction areas and second refraction areas. Each first refraction area has a first refraction force that may be based on a prescription for correcting the ametropia of the eyes. Each second refraction area has a refraction force different from the first refraction force and may function to focus images on the positions except the retina of the eyes, to inhibit the development of the ametropia. Near the central part of the lens, the second refraction areas form a plurality of independent island-shaped areas, and the first refraction areas form the areas beyond the areas of the second refraction areas.

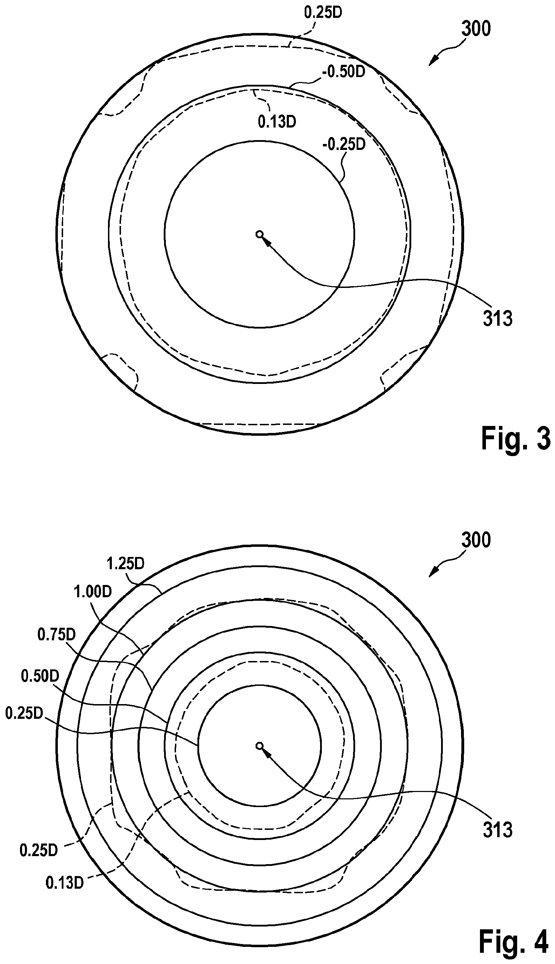

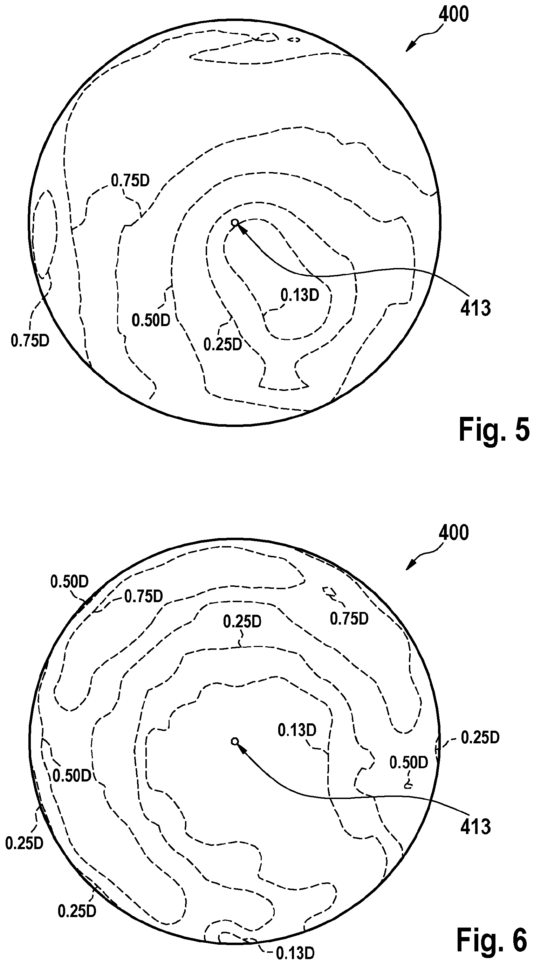

WO 2020 262569 A1 on which the present invention is based, discloses in Fig. 6 and Table 1 a first embodiment with a front surface of a spectacle lens comprising focusing structures for suppressing the progression of myopia. The front surface of the spectacle lens comprises first areas without focusing structures that causes light to converge at a predetermined position A on a retina as shown in Fig 4. Furthermore, a plurality of focusing second areas configured to cause light rays to converge at a position B before the retina as shown in Fig. 5. The back surface of the spectacle lens in this first embodiment comprises an aspherical surface, which can cause a hyperopic shift in the periphery of the spectacle lens. In other words, if looking through the first areas the light can be focused behind the retina and if looking through the second areas the desired myopic defocus can be reduced due the hyperopic shift caused by the aspherical surface of the spectacle lens of the first embodiment.

Therefore, it is an object of the present invention to present a product comprising a position-specific single-vision lens or a numerical data set describing a position-specific single-vision lens and a computer-implemented method for determining a numerical data set of a position-specific single-vision lens which prevents or reduces a an hyperopic shift of the position-specific single-vision lens to ensure a function of suppressing the progress of myopia while securing a clear vision and an excellent wearing comfort.

The problem is solved by a product according to claim 1 and a computer-implemented method according to claim 2.

According to a first aspect of the invention, a product comprising a position-specific single-vision lens or a numerical data set describing a position-specific single-vision for the purpose of manufacturing said position-specific single-vision lens, said position-specific single-vision lens comprising a front surface and a back surface, wherein said front surface comprising a first zone providing a first focal power and a second zone surrounding said first zone, comprising (i) focusing structures providing a second focal power or (ii) diffusing structures. According to the invention the back surface of the position-specific single-vision lens comprising (a) an atoroidal surface or (b) a free-form surface with no point or axis symmetry.

In context of the present specification, the term "position-specific single-vision lens" applies to a single-vision lens with a complex surface geometry, that needs to be positioned accurately according to the ordered specification and bears permanent alignment reference markings (ISO 13666:2019(E), section 3.7.2). An example of a position-specific single-vision lens is a single-vision lens calculated to take into account the as-worn position and therefore requires accurate mounting in front of the wearer's eye (ISO 13666:2019(E), section 3.7.2). The term "as-worn position" refers to a position, including orientation, of the lens relative to the eye and face during wear (ISO 13666:2019(E), section 3.2.36)

The term "numerical data set" refers to data set describing or representing design features of a spectacle lens. For example, such a data set may be stored in a memory of a computer or on a computer-readable (particularly non-transitory) storage medium. In addition, the data set may be retrievable from a data network like, for example, the internet or a local area network (LAN). A dataset resembling a representation of a numerical data set describing a position-specific single-vision may include a description of the geometric shape and the material of the spectacle lens. Such a description can e.g. include a mathematical description of the front surface, the back surface, the arrangement of these surfaces in relation to one another (including the thickness). The numerical data set can be in coded or even in encrypted form.

The numerical data set may in addition or alternatively include computer-readable instructions for controlling one or more manufacturing machines (e.g. casting, grinding, milling, lapping and/or polishing machines) in order to produce a spectacle lens having the respective design features.

In the present specification, the term "zone" is used in the context of a spectacle lens or a numerical data set describing a position-specific single-vision to denominate a portion of the spectacle lens or the numerical data set describing a position-specific single-vision which represents an area of the spectacle lens or the numerical data set describing a position-specific single-vision which is smaller than the total area of the spectacle lens or the numerical data set describing a position-specific single-vision.

The term "focal power" is a collective term for the spherical vertex power, which brings a paraxial pencil of parallel light to a single focus (and which is usually considered in the prescription by the "sphere" value or, abbreviated, "sph", and the cylindrical vertex power of a spectacle lens, which brings a paraxial pencil of parallel light to two separate line foci mutually at right angles (ISO 13666:2019(E), section 3.10.2) and which is usually considered in the prescription by the "cylinder" value or, abbreviated, "cyl".

The term "focusing structures" applies to structures providing a focus or a plurality of foci. In particular, such a focusing structure may comprise a microlens, a lenslet, a bump, etc.

The term "diffusing structures" means any structure providing diffusing properties to the respective area of the spectacle lens.

In the present specification, the term "atoroidal surface" represents a surface having mutually perpendicular principal meridians of unequal curvature, at least one of which has asphericity (ISO 13666:2019(E), section 3.4.7). The term "principal meridians" describes the meridians of a surface with the maximum and minimum curvatures (ISO 13666:2019(E), section 3.4.5). The term "asphericity" describes the departure of the curvature of a meridian of an aspherical surface or atoroidal surface from that of a circle (ISO 13666:2019(E), section 3.4.4).

In the present specification, the term "free-form surface" represents a complex surface which, in particular, can be represented exclusively by means of (in particular piecewise) polynomial functions (in particular polynomial splines such as, for example, bicubic splines, higher-order splines of fourth order or higher, Zernike polynomials, Forbes surfaces, Chebyshev polynomials, Fourier series, polynomial non-uniform rational B-splines (NURBS)). These should be distinguished from simple surfaces such as, for example, spherical surfaces, aspherical surfaces, cylindrical surfaces or toric surfaces. In other words, free-form surfaces cannot be represented in the form of conventional regular bodies such as, for example, spherical surfaces, aspherical surfaces, cylindrical surfaces or toric surfaces.

The atoroidal surface of the back surface has the advantage that rays which pass the first zone of the position-specific single-vision lens have their focal point on the retina and hence provide a clear vision. Another advantage is that rays which pass the second zone of the position-specific single-vision lens have their focal point further away from the retina compared to a similar spectacle lens with a back surface not similar to an atoroidal surface. In other words, the atoroidal surface of the back surface of the position-specific single-vision lens reduces the hyperopic shift partially or prevents it completely which results in a function of suppressing the progress of myopia while securing a clear vision and an excellent wearing comfort.

The free-form surface of the back surface has the advantage that rays which pass the first zone of the position-specific single-vision lens have their focal point on the retina and hence provide a clear vision. Another advantage is that rays which pass the second zone of the position-specific single-vision lens have their focal point further away from the retina compared to a similar spectacle lens with a back surface not similar to a free-form surface. In other words, the free-form surface of the back surface of the position-specific single-vision lens reduces the hyperopic shift partially or prevents it completely which results in a function of suppressing the progress of myopia while securing a clear vision and an excellent wearing comfort.

A preferred embodiment of a product according to the inventive concept may be characterized by a technical use of the product.

According to a second aspect of the invention, a computer-implemented method for determining a numerical data set of a position-specific single-vision lens for the purpose of manufacturing said position-specific single-vision lens, comprising the step of providing a fixed front surface of said position-specific single-vision lens comprising a first zone providing a first focal power and a second zone surrounding said first zone comprising (i) focusing structures providing a second focal power or (ii) diffusing structures. The inventive computer-implemented method for determining a numerical data set of a position-specific single-vision lens comprising the further step of designing a back surface of said numerical data set of said position-specific single-vision lens by considering a change in viewing direction and/or not perpendicular to the optical axis of said position-specific single-vision lens and by neglecting an effect of said (i) focusing structures or said (ii) diffusing structures.

The term "fixed front surface" means that at the beginning of the computer-implemented method for determining a numerical data set of a position-specific single-vision lens the front surface is chosen and not changed during the following steps of the computer-implemented method. The fixed front surface can be provided by one of the following given surfaces: spherical, aspherical or free-form surface.

The term "spherical surface" describes a part of the inside or the outside surface of a sphere (ISO 13666:2019(E), section 3.4.1). The term "aspherical surface" refers to a surface of revolution having continuously variable curvature over all or part of its area (ISO 13666:2019(E), section 3.4.1).

Designing a back surface of said numerical data set of said position-specific single-vision lens by considering a change in viewing direction and/or not perpendicular to the optical axis of said position-specific single-vision lens and by neglecting an effect of said (i) focusing structures or said (ii) diffusing structures has the advantage that the hyperopic shift can be reduced partially or completely prevented, which results in a function of suppressing the progress of myopia while securing a clear vision and an excellent wearing comfort.

A preferred embodiment of a computer-implemented method according to the inventive concept may be characterized by the technical purposes being the use of the determined numerical data set for the purpose of manufacturing a position-specific single-vision lens.

The invention will be described exemplarily in the following with reference to the drawings.
Fig. 1 shows the effect of a hyperopic shift in a peripheral zone of a state-of-the-art position-specific single-vision lens, comprising a spherical front surface and a spherical back surface with focusing structures on the spherical front surface for myopia control treatment.
Fig. 2 shows the effect of an optimized atoroidal back surface for correcting a hyperopic shift for a position-specific single-vision lens according to a first embodiment of the present invention, comprising a spherical front surface and an atoroidal back surface with focusing structures on the spherical front surface for myopia control treatment.
Fig. 3 shows the power error of a standard spherical lens and the power error of a position-specific single-vision lens comprising an atoroidal back surface for a -5 D prescription according to a second embodiment of the present invention.
Fig. 4 shows the astigmatic error of a standard spherical lens and the astigmatic error of a position-specific single-vision lens comprising an atoroidal back surface for a -5 D prescription according to a second embodiment of the present invention.
Fig. 5 shows blur due to an astigmatic error of a position-specific single-vision lens comprising a free-form back surface optimized for standard parameters but used at an individual position-of-wear according to a third embodiment of the present invention.
Fig. 6 shows blur due to an astigmatic error of a position-specific single-vision lens for a prescription of -5 D comprising a free-form back surface optimized and worn for an individual position-of-wear according to a third embodiment of the present invention.

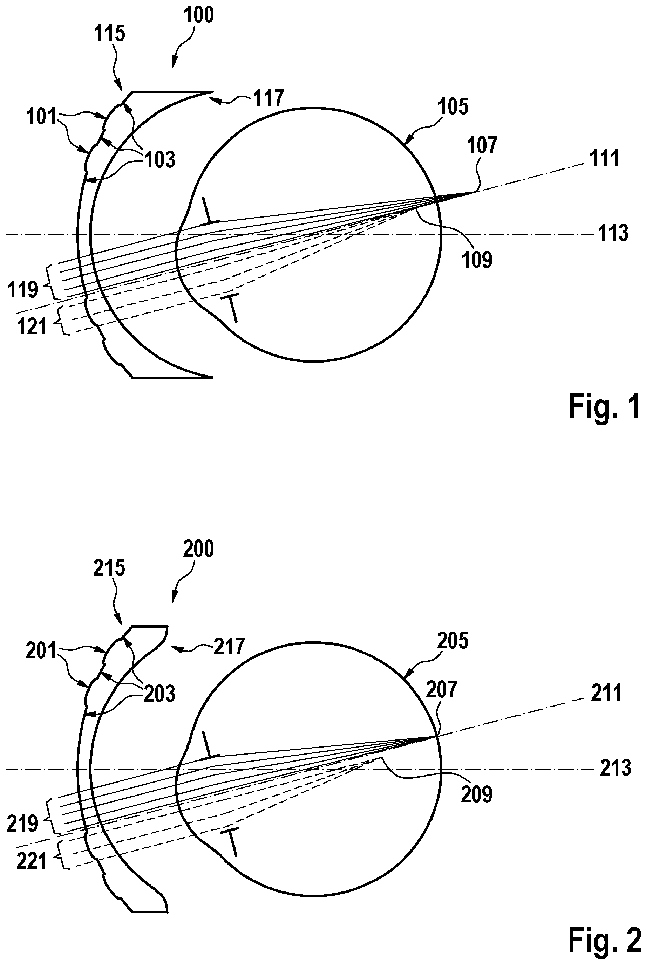

Figure 1 shows the effect of a hyperopic shift in a peripheral zone of a state-of-the-art position-specific single-vision lens 100. The position-specific single-vision lens 100 comprises a spherical front surface 115 and a spherical back surface 117. The front surface 115 comprises a first zone 103 and a second zone 101 comprising focusing structures.

If the wearer looks along the peripheral visual axis 111 of the position-specific single-vision lens 100, rays 119 which pass the first zone 103 have their focal point 107 behind the retina. This hyperopic shift causes the opposite effect of the myopia control treatment as intended. Rays 121 which pass the second zone 101 the peripheral visual axis 111 have their focal point 109 in front of but close to the retina. Due to the hyperopic shift the distance of the focal point 109 towards the retina 105 is reduced which causes a decreasing myopia control treatment and can result in a progression of myopia.

Figure 2 shows a position-specific single-vision lens 100 comprising a spherical front surface 215 and an atoroidal back surface 217 according to a first embodiment of the present invention. The effect of an optimized back surface 217 comprising an atoroidal surface resulting in a partially correction or complete prevention of a hyperopic shift for a position-specific single-vision lens 200.

The front surface 215 comprises a first zone 203 and a second zone 201 comprising focusing structures.

If the wearer looks along the peripheral visual axis 211 of the position-specific single-vision lens 200, rays 219 which pass the first zone 203 have their focal point 207 on the retina 205. This results in a complete prevention of a hyperopic shift and in a clear peripheral vision and an excellent wearing comfort. Rays 221 which pass the second zone 201 along the peripheral visual axis 211 of the position-specific single-vision lens 200, have their focal point 209 further away from the retina 205 compared to the focal point 109 of the state-of-the-art position-specific single-vision lens 100 of Figure 1. Due to the prevention of a hyperopic shift the distance of the focal point 209 towards the retina 205 is enhanced which causes a more effective myopia control treatment and results in a suppressing of the progression of myopia.

Figure 3 shows the power error distribution of a standard spherical lens (solid line) compared to the power error distribution of a position-specific single-vision lens comprising an atoroidal back surface (dashed line) according to a second embodiment of the present invention. Both lenses do not comprise a second zone 101, 201 on the front surface of the lenses. Hence, the power error distributions shown in Figure 3 are based on the design of the front and back surface of the lenses.

The standard spherical lens (solid line) shows negative power errors leading to a hyperopic shift, which results in an accommodation trigger for the wearer and therefore to a counterproductive impact to usual myopia control triggers.

The position-specific single-vision lens according to the present invention comprises an atoroidal back surface (dashed line) which results in positive power errors which are desired for lenses optimized for an individual myopic prescription. Hence, the atoroidal back surface does not result in an accommodation trigger for the wearer and therefore a clear vision and an excellent wearing comfort is ensured.

Figure 4 shows the astigmatic error distribution of a standard spherical lens (solid line) compared to the astigmatic error distribution of a position-specific single-vision lens comprising an atoroidal back surface (dashed line) according to a second embodiment of the present invention. Both lenses do not comprise a second zone 101, 201 on the front surface of the lenses. Hence, the astigmatic error distributions shown in Figure 4 are based on the design of the front and back surface of the lenses.

The standard spherical lens (solid line) shows higher astigmatic errors leading compared to the position-specific single-vision lens comprising an atoroidal back surface (dashed line).

Figure 5 shows unwanted blur due to an astigmatic error (dashed line) of a position-specific single-vision lens 400 according to a third embodiment of the present invention. The position-specific single-vision lens 400 comprising a free-form back surface optimized for standard parameters but used at an individual position-of-wear. The position-specific single-vision lens 400 does not provide clear vision along the primary direction of the visual axis 413. At this zone of the lens an isoline with an astigmatic error of 0.13 D and 0.25 D is shown in Figure 5 which results in the mentioned blur if the wearer looks along the primary direction of the visual axis 413. At the peripheral zone of the position-specific single-vision lens 400 the astigmatic error enhances up to 0.75 D which results in even higher blur if the wearer moves the eye towards the peripheral zone of the position-specific single-vision lens 400.

Figure 6 shows unwanted blur due to an astigmatic error (dashed line) of a position-specific single-vision lens 400 according to a third embodiment of the present invention. The position-specific single-vision lens 400 comprising a free-form back surface optimized and worn for an individual position-of-wear. In other words, Figure 6 shows the same evaluation of the lens as in Figure 5 but additionally optimized for the parameter-of-wear. Due to the additional optimization the zone in which the astigmatic error is below 0.25 D is increased significantly compared to Figure 5 and covers a wider zone of the position-specific single-vision lens 400 including the primary direction of the visual axis 413. Hence, the primary direction of the visual axis 413 is not affected by unwanted blur and a clear vision looking along the primary direction of the visual axis 413 is achieved.

## Claims

1. A product comprising a position-specific single-vision lens (200, 300, 400) or a numerical data set describing a position-specific single-vision lens (200, 300, 400) for the purpose of manufacturing said position-specific single-vision lens (200, 300, 400), said position-specific single-vision lens (200, 300, 400) comprising a front surface (215) and a back surface (217),
wherein said front surface comprising
- a first zone (203) providing a first focal power,
- a second zone (201) surrounding said first zone (203) comprising (i) focusing structures providing a second focal power or (ii) diffusing structures providing,
**characterized in that**
said back surface (217) comprising (a) an atoroidal surface or (b) a free-form surface with no point or axis symmetry.

2. A technical use of a product according to claim 1.

3. A computer-implemented method for determining a numerical data set of a position-specific single-vision lens (200, 300, 400) for technical purposes, comprising
- providing a fixed front surface (215) of said position-specific single-vision lens (200, 300, 400) comprising a first zone (203) providing a first focal power and a second zone (201) surrounding said first zone (203) comprising (i) focusing structures providing a second focal power or (ii) diffusing structures
**characterized in that**
- designing a back surface (217) of said numerical data set of said position-specific single-vision lens (200, 300, 400) by considering a change in viewing direction and/or not perpendicular to the optical axis of said position-specific single-vision lens (200, 300, 400) and by neglecting an effect of said (i) focusing structures or said (ii) diffusing structures.

4. The computer-implemented method according to claim 3, **characterized in that** said technical purposes being the use of the determined numerical data set for the purpose of manufacturing a position-specific single-vision lens (200, 300, 400).
